# EUROPEAN PATENT SPECIFICATION

(11) **EP 3 459 398 B1**
(45) Date of publication and mention of the grant of the patent: **19.02.2020**
(21) Application number: 18195028.8
(22) Date of filing: 18.09.2018
(51) Int. Cl.: A47F 5/00, A01G 7/04, A47F 7/00, A01G 31/06

(54) **APPARATUS AND METHOD FOR THE INDOOR GROWING OF VEGETABLES**
VORRICHTUNG UND VERFAHREN ZUM WACHSEN VON PFLANZEN IM INNENBEREICH
DISPOSITIF ET PROCÉDÉ POUR LA CROISSANCE DE PLANTES EN INTÉRIEUR

(30) Priority: 21.09.2017 IT 201700105600
(43) Date of publication of application: 27.03.2019
(73) Proprietor: CEFLA S.C., 40026 Imola (BO) (IT)
(72) Inventor: Pasini, Alessandro, 40026 Imola (BO) (IT); Betti, Lorenzo, 40026 Imola (BO) (IT); Grandi, Samuele, 40026 Imola (BO) (IT)
(74) Representative: Del Nero, Susanna

(56) References cited:
- JP-A- 2008 245 554
- US-A- 6 105 309
- US-A1- 2014 115 958
- US-A1- 2017 223 904
- US-B1- 9 681 504

## Description

The present invention relates to the technical field of shopfitting for points of sale, and in particular to an apparatus, preferably in the form of a display cabinet, and a method for the indoor growing of edible vegetables and/or ornamental plants.

Nowadays, there is a trend toward "from farm to table" food, wherein the pathway of food from its growing area to its consumption area is the shortest possible. This translates into less pollution, thanks to fact that a small quantity of fuel is spent for transporting said food from its production area to consumer's home.

Thanks to growing lamps, today a field is not necessary anymore for growing vegetables like salad or small edible plants. Growing lamps can be used, preferably LED lamps emitting a suitable wavelength, so that the growing of vegetables directly inside a point of sale (supermarket) becomes possible.

It is known that the average farm-to-table time requires some days, but in the worst case can reach 9 and even 16 days: during this time, vegetables record a loss of nutrients ranging from 10% for carrots to 45% for green beans.

Inside an apparatus according to the present invention, substantially three kinds of edible vegetables can be grown:
I. Microgreens: young and tender plants produced from various kinds of vegetables, harvested at a more advanced stage of ripening than sprouts. Research showed that microgreens contain up to 400 time the normal concentration of vitamins with respect to full-grown vegetables, while their flavour is much more intense with respect to full-grown vegetables. The most popular microgreens comprise: garlic, leek, fennel, lemon balm, borage, sunflowers, broccoli, radish, mustard, cabbage. Microgreens are normally harvested after 5-7 days after germination, and last up to 7 days from the harvest.
II. Baby-leaf: generally harvested from two to four weeks after seeding at the stage of cotyledon leaf or leaves or with the first real leaves. The most popular baby leaf comprise rocket, micro turnip greens, micro kale, micro chicory, micro carrot of Polignano, strawberries etc.
III. Aromatic plants or lettuce: e.g. basil, parsley, rosemary, rocket, etc.

It is worth noting that both microgreens and baby leaf lack any legal definition. The terms "microgreens" and "baby leaf" are marketing terms used to describe their respective categories. On the other hand, sprouts are legally defined; they germinate in water, and do not need irradiation, as they are grown in the darkness.

The edible vegetables of the above-quoted three kinds are normally harvested after 5-28 days from germination, according to the kind of vegetable. The edible part is the aerial part without roots. They are grown in pre-seeded trays containing a suitable soil; once they have grown, they are packaged in transparent trays and placed on sale shelving.

For their growth, said vegetables must be irradiated with radiations having suitable wavelengths. It is known that in the vegetative phase the preferred wavelengths range 400 to 520 nanometres, while during the flowering phase the preferred wavelengths range 610 to 720 nanometres. A LED lamp having suitable features is described in the application IT 102017000066899 of C-LED S.r.l.

In synthesis, the two important parameters for growing vegetables using artificial lighting are PAR (Photosynthetically Active Radiation) measured in nanometres, and PFFD (Photosynthetic Photon Flux Density) measured in µmol m⁻² s⁻¹. Indicatively, PAR has a range of 400 to 850 nm, more specifically 400 - 750 nm, while PFFD indicatively lies in a range 30 - 500 µmol m⁻² s⁻¹, the most of plants needing 120 - 300 µmol m⁻² s⁻¹.

In the art, apparatuses provided with a plurality of shelves in their turn provided with LED bars emitting different wavelengths (e.g. red 620-670 nm; blue 400-500 nm; optionally far red 710-850 nm and optionally visible white light 400-700 nm) and a control unit are known. Said control unit is provided with an internal memory saving the recipes containing the parameters allowing the optimization of the growth of single vegetal species. Examples of apparatuses of the known art are e.g. US2014115958 of Greentech Agro LLC, US2017223904 of Fodder Solutions Holdings Pty LTD, US9681504 of New Energies & Alternative Tech Inc.

In this context, recipe means the set of parameters PAR; PFFD; time of switching on/off of specific LEDs; duration of the on period for each kind of LED; humidity; temperature; irrigating cycles; which are combined in order to optimize the growth of a given vegetal species.

In addition to a suitable radiating unit, an apparatus for the indoor growing of vegetables must be provided with an irrigation system for plants, allowing to channel water, coming from mains or from a dedicated reservoir, to plant roots.

It is known that microorganisms, some of which might even be opportunistic pathogen (e.g. Pseudomonas, possibly Legionella), rapidly contaminate stagnating water at room temperature. A disinfection system becomes mandatory, in order to prevent that the total bacterial count at room temperature (20-22°C) reaches excessive levels, and the growth of human pathogens.

The present invention aims to provide an apparatus and a method for the indoor growing, or anyway the growth with an insufficient natural light, of edible vegetables for human consumption, or of ornamental plants, wherein the use of the water employed by the irrigating system can be reduced.

This object is achieved by an apparatus and a method having the features of the independent claims. Advantageous embodiments and refinements are specified in claims dependent thereon.

The present invention provides an apparatus comprising a LED radiating source (LED bars), an irrigation system and a thermo-regulating system. The arrangement of the shelves supporting the growing plants, which are vertically superimposed, their shape and inclination, the presence of electrovalves regulating the passage of water from the above shelf to the underlying shelf, and of a control unit, all allow to minimize the quantity of water used for irrigating said vegetables.

In a preferred embodiment, the growing apparatus is provided with a control unit allowing to detect, adjust and record the parameters of lighting, irrigation, thermoregulation and disinfection so as to optimize them for the plant to be grown.

In a preferred embodiment, the growing apparatus is provided with the possibility to perform and record continuous and/or discontinuous disinfection cycles, performed by adding to irrigation water a suitable chemical product, preferably based on peroxide.

In a preferred embodiment, LED bars comprise at least one LED emitting a visible radiation (400-700 nm) for suitably lighting the growing plants and correctly evaluating their ripening status.

In a preferred embodiment, LED bars are fixed so as to adjust the tilting of the longitudinal axis of the light cone emitted by said LEDs.

In a preferred embodiment, the back panel of the growing portion is realized in a modular way, so as to facilitate the access of staff members to the growing portion, and to facilitate maintenance and cleaning operations.

A first advantage of the present invention is the possibility of the indoor growing of vegetables, minimizing the quantity of water used for irrigating said vegetables. Said advantage is particularly relevant when the display unit cannot be connected to mains for the supply of water and to the sewer for eliminating excess water, and said display unit must be manually supplied with water by a person of the staff.

A second advantage of the present invention consists in using structures already known and used in point of sales for growing vegetables, so minimizing the cost of implant.

A third advantage derives from the possibility of varying the parameters of lighting, irrigation and thermoregulation, so as to grow different vegetables according to market demand.

A fourth advantage comes from the possibility to set the best parameters for each species to be grown.

The apparatus according to the present invention is provided at least with two shelves for growing edible vegetables and/or ornamental plants.

Said vegetables are irradiated by LED lamps emitting radiations of suitable wavelengths (e.g. red 620-670 nm; optionally blue 400-500 nm; optionally far red 710-850 nm) and optionally a fourth kind of LED emitting white visible light (400-700 nm).

Moreover, the apparatus is provided with an irrigation system, which can work differently shelf by shelf. The irrigation system can be directly connected to water mains and sewer, or in the lower portion of the apparatus there are provided supply/discharge reservoirs, which are manually filled and emptied, respectively, by a staff member of the point of sale.

Especially when the apparatus is provided with water reservoirs, but also when the apparatus is directly connected to water mains and sewer, the accumulation of biofilm on the walls of tubing and reservoirs must be prevented. This can be done in two ways, which are synergic:
- With a continuous disinfection, adding to the water inside reservoirs a peroxide-based disinfectant, which prevents the proliferation of the bacterial count (bacteriostatic effect);
- With a discontinuous disinfection, when there are no plants in the apparatus, inserting a peroxide-based disinfectant in all the tubing and reservoirs for a pre-defined time, which can eliminate the present microorganisms (bactericidal effect).

Advantageously, the disinfectant product can be the same, used at a suitable concentration and for a suitable time.

Further advantages and properties of the present invention are disclosed in the following description, in which exemplary embodiments of the present invention are explained in detail on the basis of the drawings:
- Figure 1A, 1B: Perspective view of two embodiments of the apparatus according to the present invention;
- Figure 2: Perspective view of the growing portion of the apparatus;
- Figure 3A, 3B: Detail of two limit position of LED bars;
- Figure 4: Exploded, perspective view of a back panel;
- Figure 5: Perspective view of a shelf;
- Figure 6: Perspective view of an engagement/release system of a shelf;
- Figure 7: Perspective view of a housing;
- Figure 8: Detail of the supply hydraulic circuit;
- Figure 9: Detail of the return hydraulic circuit.

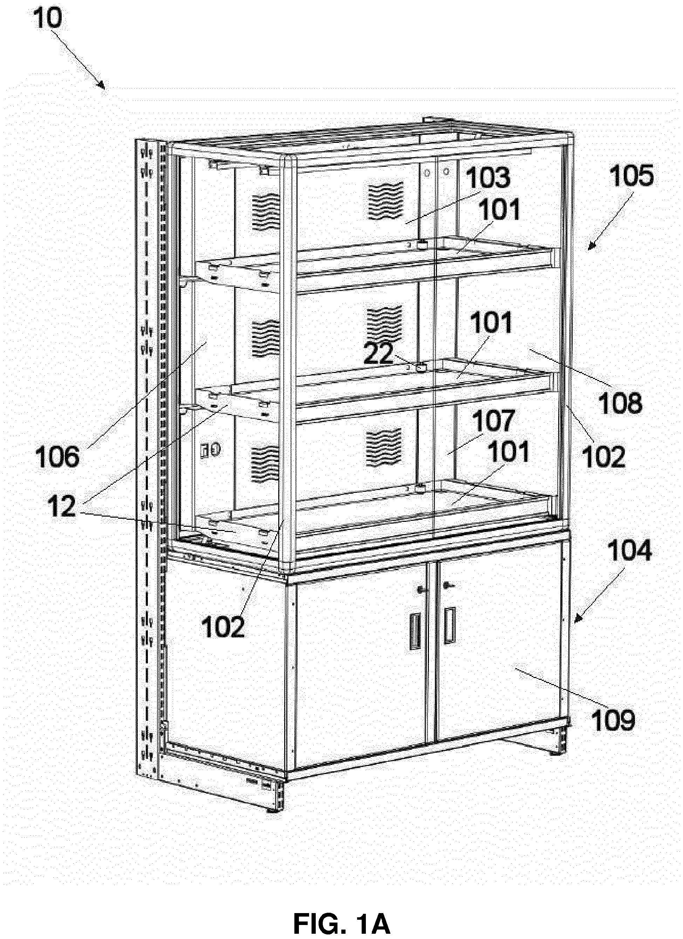

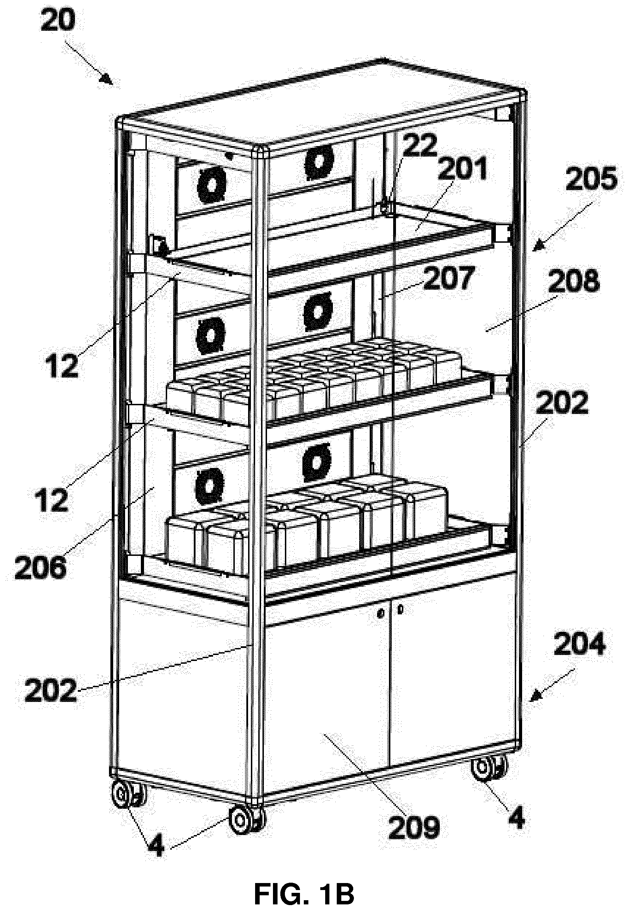

Figures 1A, 1B show two embodiments of the apparatus 10, 20 according to the present invention. One of the features differentiating the embodiment of Figure 1A from the embodiment of Figure 1B is that the embodiment of Figure 1A is fixed, while the embodiment of Figure 1B is mobile, as it is provided with four wheels 4.

Figures 1A and 1B show an apparatus 10, 20 for the indoor growing of edible vegetables and/or ornamental plants, comprising a top portion 105, 205 for growing and a lower portion 104, 204 that is a housing.

The growing portion 105, 205, closed on its six sides, in its turn comprises:
- Any number of shelves 101, 201;
- A structure supporting said shelves, comprising four uprights 102, 202 and pairs of supporting brackets 12.

The growing portion 105, 205 comprising said shelves 101, 201 is enclosed inside a closed structure comprising a back panel 103, 203, two lateral transparent sides and two transparent doors; staff members and customers of the point of sale can open said doors 108, 208.

Pairs of side brackets 12 for supporting shelves 101, 201 are supported by a respective pair of uprights 102, 202 through an engagement pre-set in an internal guide of the uprights themselves.

In a preferred embodiment, the tilting of the shelves 101, 201 to channel water to an exit port 5 is adjustable, even taking into account the tilting of the whole apparatus 10, 20 in consequence to floor unevenness. To this aim, side brackets 12 are provided with a (not shown) adjusting pin to regulate the tilting of shelves 101, 201.

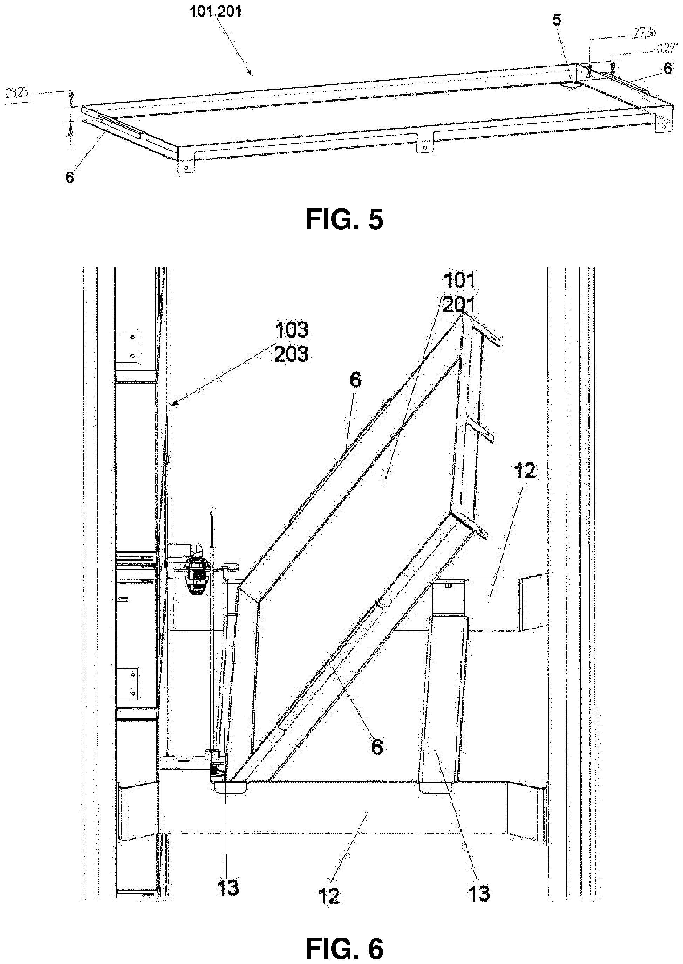

With reference to the above-described embodiment, the side brackets can be provided of an adjusting device for a support or engaging means of the respective shelf 101, 201, which means allows to adjust the level and/or the tilting of a corresponding support/engagement element of said shelf 101, 201. With reference to the illustrated embodiment, and with special reference to the embodiment of Figures 5 and 6, said support and/or engagement to bracket 12 are the flaps 6. Flaps 6 are provided on the two opposed short sides of shelf 101, 201 and lean and overlie with their side on the top side of the corresponding bracket 12 and to the external side wall.

In an embodiment of the adjusting device of the support or engaging means, two adjustable spacers can be provided with respect to their protrusion from the top side of the bracket 12. Said spacers are spaced from each other along the longitudinal extension of the top side of the bracket, in a measure shorter than the length of the support and/or engagement flap 6. The two devices can be adjusted so that they protrude beyond the surface of the top side of bracket 12, even in a different way, and independently from each other for each bracket. In this way, they generate a tilting of the shelf 101, 201 with respect to the horizontal plane, i.e. the defined plane containing or tangent to the two top surfaces of brackets according the directions both longitudinal and transversal of the shelf 101, 201 supported by brackets 12.

There can be provided different kinds of adjusting devices for the tilting of shelves 101, 201, which work according to different principles; these devices are part of the choices of the skilled man makes within her/his basic technical knowledge.

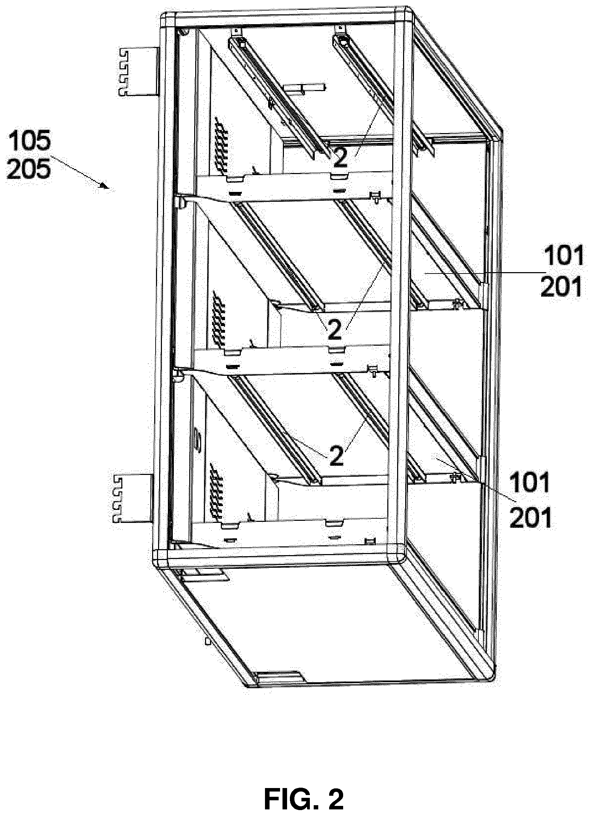

Figure 2 shows a detail in a perspective view from below of the growing portion 105, 205, allowing to appreciate that above each shelf 101, 201 there is provided at least one LED bar 2, preferably two LED bars 2. Said bar LED 2 comprises a plurality of LEDs to irradiate the plants placed on the underlying shelf with suitable wavelengths

Each LED bar 2 comprises:
- A first kind of LED emitting red light (620-670 nm), indicated with R;
- Optionally a second kind of LED emitting blue light (400-500 nm), indicated with B;
- Optionally a third kind of LED emitting Far Red radiations, emitting radiations having indicatively a wavelengths of 710-850 nm, indicated with FR;
- Optionally a fourth kind of LED emitting visible radiations, indicatively ranging 400 to 700 nm, indicated with V.

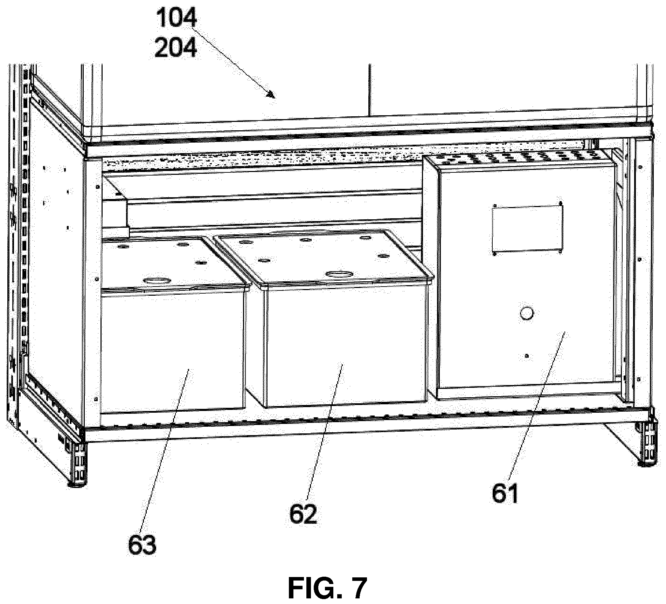

It is known that plants have different requirements regarding the quantity of light, radiating time and wavelength needed to improve their growth. Inside the housing there is provided a control unit 61 (visible in Figure 7), allowing to adjust, shelf by shelf, the emission of radiations of the single LED bars 2. E.g. on a shelf 101, 201 basil may be grown, requiring the emission of radiations B and R for at least 16 h/day, while on the underlying shelf 101, 201 strawberries are grown, requiring the emission of FR radiations for at least 14 h/day. In other words, basil and strawberries require two different recipes in order to optimize their respective growth.

The control unit 61 allows to adjust the following parameters for each LED bar 2:
- PAR;
- PFFD;
- Switching on and off of the LEDs of a specific kind;
- Time during which a specific LED remains on (working time);
so as to obtain the correct recipe for the best growing of every kind of vegetable/plant.

It is worth nothing that far-red radiations (FR 710-850 nm) lie at the end of the light spectrum visible by human eye. When a plant is lighted with far-red radiations, the colours perceived by human eye are distorted. When the plant produces red fruits (tomatoes, strawberries, etc.), if the plant is lighted with far-red radiations, evaluating the degree of ripeness is very difficult.

In an embodiment, bar LED 2 are provided with V LEDs emitting visible radiations (400-700 nm), which can be switched on through a (not shown) dedicated switch, placed on the front or on the side of the growing portion 105, 205. In the preferred embodiment, said V LED emit visible radiations only during the time while the switch is pressed by a customer or a staff member of the point of sale, so as to minimize energy consumption, at the same time allowing to correctly evaluate the degree of ripeness of the plants grown on shelf 101, 201.

In an alternative embodiment, said V LEDs emit visible radiations only for a pre-defined time after that the switch was pressed (e.g. for a minute), always with the end of minimizing energy consumption, and not depending by the fact that the customer remembers to turn the switch off after she/he finished using the visible light.

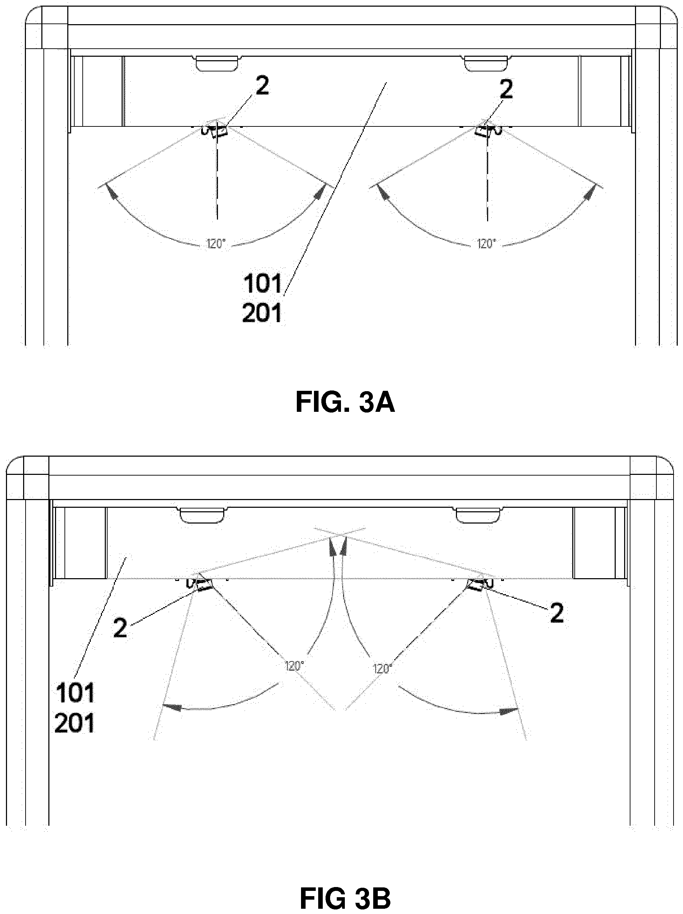

In an embodiment, LED bars 2 are fixed to the underside of shelf 101, 201. The light cone emitted from LEDs falls so that the longitudinal axis of the cone is perpendicular with respect to the plane defined by the underlying shelf 101, 201. Figure 3A shows the light cone, e.g. 120° wide, emitted by the LEDs placed in the LED bar 2; their (dotted) bisector is perpendicular to the underlying plane.

In an alternative embodiment, LED bars 2 are fixed to the underside of shelf 101, 201 so that the axis of the light cone emitted by LEDs is tilted with respect to the underlying shelf 101, 201, e.g. a tilting of 5-45° settable through a suitable adjusting device; this allows to light the growing plants with different angles of irradiation. Figure 3B shows the light cone, e.g. 120° wide, emitted by LEDs placed in LED bars 2; its (dotted) bisector is tilted, in this case of 45°, with respect to the underlying plane.

The growing portion 105, 205, which is completely closed with respect to its environment, being provided on its back with a back panel 103, 203, a ceiling, two transparent walls on its sides, two transparent openable doors (108, 208), and a bottom, is moreover provided with a suitable number of fans 3 placed in the back panel 103, 203. Said fans aim to ventilate and to adjust the temperature of the growing plants placed in the growing portion 105, 205.

Inside the growing portion 105, 205 there are provided (not shown) humidity and temperature sensors, which transmit the detected information to the control unit 61, which in response activates the working of fans 3, adjusting the temperature and speed of said fans.

Air is taken from the environment and is filtered by a (not shown) filter in the fans themselves, so as to prevent the entrance of micro particles.

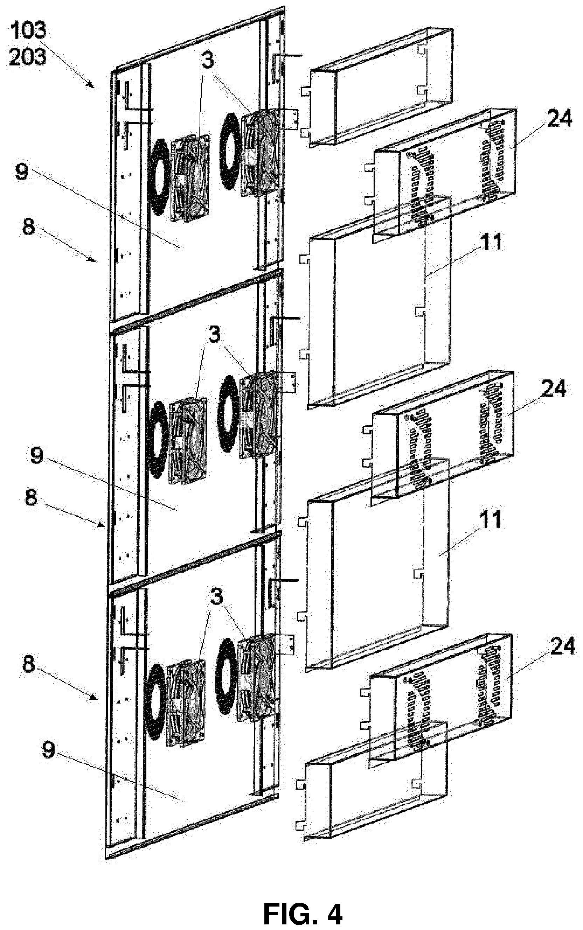

Said fans 3 are preferably placed in the back panel 103, 203. In a preferred embodiment, the back panel 103, 203 is produced in a modular form, as shown in Figure 4. Each module 8 of the back panel 103, 203 comprises at least one fan 3, preferably two fans 3. Said fans 3 are supported by a structural portion 9, and are covered by an aesthetical casing 24 provided with splits in correspondence of said fans. The remaining structural portions 9, above and under fans 3, in their turn are covered by a further aesthetical casing 11, so that the user of apparatus 10, 20 sees a continuous wall like the one shown in Figures 1A, 1B.

In a (not shown) alternative embodiment, instead said fans 3 are placed in the underside of shelves 101, 201, mechanically supported by a pair of suitably placed beams 13.

The modular structure of back panels 103, 203 has sundry advantages. A first advantage lies in that each module 8 is disassemblable independently from the other modules 8, allowing an easier access to each sector of the growing portion 105, 205. A second advantage is that, in case of fan failure, the portion 8 wherein the out of order fan is placed can be immediately disassembled and replaced with a new, working back panel module 8.

Figure 5 shows the shape of each shelf 101, 201. Shelves 101, 201 have a substantially rectangular shape: they are supported by supporting brackets 12 through two side flaps 6; have a port 5 to allow the discharge of the water used to irrigate the plants. Shelves 101, 201 are not completely planar, but are shaped so that water is funnelled to said port 5, so that completely drains and does not stagnate in said shelf 101, 201, for reasons that will be better explained in the following.

The shaping of shelves means that at least part of the bottom wall of shelves 101, 201 is tilted according to at least one of the longitudinal and/or transversal directions of said shelves, with respect to an ideal plane defined by the top surfaces of brackets 12 intended to support said shelves 101, 201, i.e. a plane containing or tangent to said surfaces. In a further variant, the bottom wall of shelves 101, 201 has a shape with a lightly concave or convex polygonal section, wherein at least two different and adjacent parts of said bottom wall have two different inclinations.

The construction according to the above-discussed principles ensures that with a proper positioning of the apparatus the bottom walls of shelves channel water toward the exit port 5 through gravity.

On the shelf 101, 201 there is provided a floating valve 22, visible in Figure 1A, 1B, which allows to detect the level of water present in the shelf itself during the irrigation phase.

Figure 6 shows the detail of the engagement/release system of shelves 101, 201. When in place, said shelves 101, 201 are supported through side flaps 6 by two side brackets 12. During cleaning, shelves 101, 201 can easily be removed from their mechanical supporting structure by turning them up. The rotation is needed in order to prevent bumping against hydraulic circuit components, which will be described in the following.

Figure 6 also allows observing two beams 13 to which said LED bars 2 are fixed.

Figure 7 shows the inside of the housing 104, 204, normally not visible by customers and staff members of the point of sale, in that it is closed by two non-transparent doors 109, 209.

Said housing 104, 204 houses a control unit 61; said control unit is provided with an input unit, preferably in the form of a touch screen. Said control unit allows to adjust all the parameters of the growing apparatus 10, 20, as will be better explained in the following.

There are provided two main embodiments for the apparatus 10, 20:
- A first (not shown) embodiment, wherein the apparatus is directly connected to water mains/sewer, both for water storage and discharge.
- A second embodiment, not directly connected to water mains, wherein there is provided a (not shown) unique water reservoir, or two water reservoirs.

In the embodiment wherein there is no direct connection to water mains, particularly in the case of the mobile apparatus 20, the storage reservoir, or the (not shown) unique reservoir must be manually filled, and the (not shown) unique reservoir or the discharge reservoir must be manually discharged.

Figure 7 shows the embodiment comprising two reservoirs, one storage reservoir 63 and a discharge reservoir 62. Preferably, the reservoir/s is/are closed by a top cover.

Advantageously, the storage reservoir 63 and discharge reservoir 62, or the (not shown) unique storage/discharge reservoir are provided with (not shown) floating valves which allow to detect their filling level.

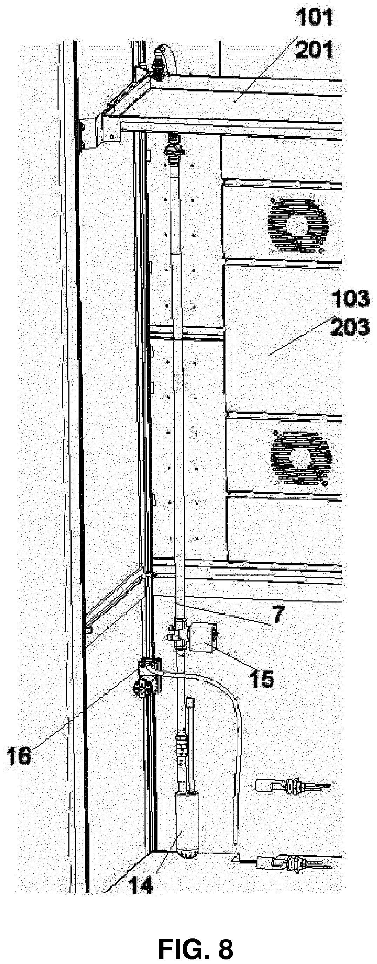

Figure 8 shows the detail of the supply hydraulic circuit, starting from reservoir 63 or from the (not shown) unique reservoir to get to the highest shelf 101, 201.

In a preferred embodiment, there is provided an oxygenator 16, which keeps the water contained in the reservoirs under motion, preventing bacterial proliferation inside said reservoirs.

A supply pump 14 withdraws water from supply reservoir bringing it directly to the highest shelf 101, 201 to allow its flooding. In its upward path, water enters into contact with a flowmeter 15 controlled by control unit 61; said flowmeter opens when said control unit gives its consensus.

There are provided different irrigation modes:
- In a first embodiment, the irrigation of all the shelves occurs at the same time; this of course requires the opening of a (not shown) flowmeter for each shelf 101, 201;
- In a second embodiment, the irrigation of all the shelves is sequential: water passes from a higher shelf to the underlying shelf.

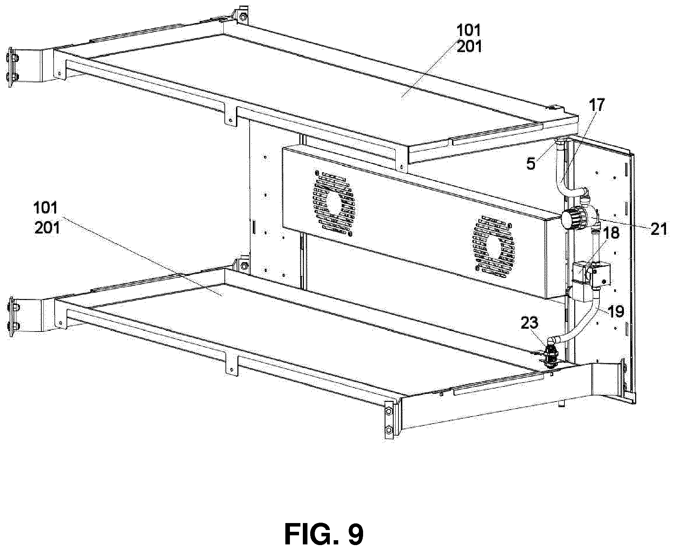

In this second embodiment with sequential irrigation, the highest shelf 101, 201 receives water directly from supply tube 7. Water remains in the shelf for a pre-set time, and thanks to the shape of shelf 101, 201 and to its light tilting, water drains through the port 5 of shelf 101, 201. All the water collected from port 5 is channelled to the immediately underlying shelf 101, 201, and here remains for a pre-defined time, and then is drained through port 5 and channelled to the underlying shelf 101, 201. Obviously, the passage from the overlying shelf 101, 201, to the underlying shelf 101, 201, is regulated by the opening/closing of an electro valve 18 (visible in Figure 9).

This step is repeated for a number of times equal to n-1 shelves. The water drained from the lowest shelf 101, 201 is then channelled to the discharge reservoir 62 or to the (not shown) unique reservoir, or optionally to the water sewer.

In a preferred embodiment, there is provided a (not shown) unique reservoir, which replaces the supply reservoir 63 and the discharge reservoir 62. In this embodiment, allowing a special saving of water, the irrigation cycle occurs in the following way. Let us suppose that the apparatus 10, 20 is provided with just two shelves 101, 201. From the unique reservoir e.g. three litres of water are withdrawn, which are poured into the first shelf 101, 201. The growing support of plants is directly in contact with said shelf 101, 201, so that when water coming from tube 7 inundates shelf 101, the growing support is wetted and plant roots come directly into contact with water. After a pre-defined time, water drains from port 5, thanks to the action of an electro valve 18. Let' say that the plants on the first shelf 101, 201 absorb about one litre of water; the remaining two litres of water are channelled to the second shelf 101, 201; the plants here absorb one litre of water, too, and the remaining one litre is channelled to the unique storage/discharge reservoir. Said storage/discharge reservoir is provided with a filter for the water channelled by the shelves 101, 201, and with a tap which allows to empty it completely for cleaning/maintenance (both not shown).

Figure 9 shows the detail of the return hydraulic circuit between one shelf 101, 201 and the underlying shelf 101, 201.

A tube 17 withdraws water from discharge port 5 and channels it through an electro valve 18, controlled by control unit 61, too, to a further portion of tube 19, which channels water to the underlying shelf 101, 201. The tube 19 at its end is provided with a bulkhead fitting 23, which allows the correct supply of shelf 101, 201.

The closing of said electro valve 18 prevents the downward flowing of water, and therefore water completely floods the shelf 101, 201, dwelling for all the time during which said electro valve 18 is closed. When the electro valve is opened, water is channelled to the underlying shelf 101, 201 or to discharge/sewer.

Preferably, upstream said electro valve 18, there is provided a water filter 21, intended to stop the particles that might detach from plant support.

Obviously, the structure of the return hydraulic circuit is modular, and is the same for all the shelves 102, 201 present in the growing portion 105, 205.

The water collected downstream the lowest shelf 101, 201 is then collected in the discharge reservoir 62 or in the (not shown) unique reservoir, or channelled to sewer.

The supply and return hydraulic system is aesthetically covered by suitable casings 106, 206, 107, 207 (visible in Figures 1A and 1B), so that the appearance of the display cabinet 10, 20 is pleasant. Preferably, said casings 106, 206, 107, 207 are modular and cover just one sector between two consecutive shelves 101, 201.

Optionally, the unique storage/discharge reservoir, but also the storage reservoir 63 and the discharge reservoir 62 are provided with at least a (not shown) UV LED, having a known bactericidal effect, which allows to maintain the bacterial count of room temperature water within sufficiently low levels. Such known LEDs emit radiations between 240 to 280 nm, with a peak at the wavelength of 265 nm. Such radiations are known as UV-C.

In alternative, or in addition, to the water contained in the reservoir/s a disinfectant product can be added, preferably a peroxide-based disinfectant, intended to maintain the bacterial count within acceptable limits. In agriculture, peracetic acid-based products are known and used. Such products are used to perform a continuous disinfection and are not toxic for plants.

In alternative or in addition, the hydraulic circuit of the apparatus 10, 20, can be completely emptied and the plants removed, and the circuit can be filled with a peroxide-based product, even the same product used for continuous disinfection, in a more concentrated solution than that used for continuous disinfection. Leaving the product for discontinuous disinfection for a sufficient contact time (which is a function of the product and of the concentration used) in the reservoir/s and in all the tubing, they can be disinfected so that biofilm growth on the walls of reservoirs and tubing lumen can be prevented.

In a particularly preferred embodiment, the product used for continuous disinfection is hydrogen peroxide at a concentration of 300/600 ppm (parts per million), while the product used for discontinuous disinfection is hydrogen peroxide at a concentration of 3-3.5%. Optionally, in both cases, the solution can even contain silver ions at a concentration of about 0.001%. Hydrogen peroxide-based products have the advantage that the molecule of peroxide decomposes into H₂O + O₂, leaving no residue.

In the not shown embodiment, wherein the irrigation system is connected directly to water mains, both for supply and discharge, there is provided a small reservoir containing the product for disinfection, both discontinuous and continuous. For the continuous disinfection, there is a dosing device capable of adding the suitable quantity of disinfectant to the incoming flow of water. For the discontinuous disinfection there is provided a system allowing to completely empty the irrigation tubes and to introduce the pure disinfectant or anyway the disinfectant at a suitable dilution. The disinfectant remains in the circuit for the needed time, and then the tubing is filled again with water coming from mains.

In summary, control unit 61 can control:
- The emission of radiations by LED bars 2 (PAR, PFFD, switching on/off of LEDs of a given kind; working time for each kind of LED);
- Air circulation through fans 3, which allows to adjust the degree of humidity and temperature inside said growing portion 105, 205;
- The irrigation process: for each kind of plant, the number of irrigation cycles to be performed every day is set, and the dwell time of water in the shelf 101, 201.
In other words, the control unit 61 can optimize the growth of the vegetables contained in the growing unit 10, 20, using the specific recipe for the specific kind of grown vegetable.

Moreover, control unit 61 allows to record all the above-quoted operation in an internal log, including the number and duration and date and time of the disinfection cycles manually performed by a staff member.

Such data are saved inside said control unit 61, and from here optionally transmitted to a mobile device (tablet, smartphone) and/or a cloud.

In this context, cloud indicates a type of Internet-based computing that provides shared computer processing resources and data to computers and other devices on demand. It is a model for enabling ubiquitous, on-demand access to a shared pool of configurable computing resources (e.g., computer networks, servers, storage, applications and services), which can be rapidly provisioned and released with minimal management effort.

In a preferred embodiment, said control unit 61 is provided with alarms, which are connected to floating valves. In particular the (not shown) floating valves inside reservoirs 63, 63 and the unique supply/discharge reservoir allow to detect that the water inside them went beyond or below given pre-set levels. In the same way, the floating valves 22 placed on shelves 101, 201 allow to detect that they are filled above the pre-set level.

Moreover, is worth underlining that in said control unit 61 all the parameters needed (recipe) (PAR, PFFD; switching on/off of LEDs of a specific kind; working time for each kind of LEDs; humidity; temperature; irrigation cycles) which allow to optimize the growth of a single vegetal species can be saved. A staff member attending to apparatus 10, 20 when she/he inserts on shelf 101, 201 a given vegetal species, can manually recall such programs/recipes.
- 2: LED bar
- 3: fan
- 4: wheel
- 5: port
- 6: flap
- 7: supply tube
- 8: back panel module
- 9: back panel structural portion
- 10: growing apparatus
- 11: aesthetical back panel casing
- 12: side bracket
- 13: beam
- 14: supply pump
- 15: supply flowmeter
- 16: oxygenator
- 17: tube
- 18: discharge electro valve
- 19: tube
- 20: growing apparatus
- 21: water filter
- 22: floating valve
- 23: bulkhead fitting
- 24: fan casing
- 61: control unit
- 62: storage reservoir
- 63: discharge reservoir
- 101: shelf
- 201: shelf
- 102: upright
- 202: upright
- 103: back panel
- 203: back panel
- 104: housing
- 204: housing
- 105: growing portion
- 205: growing portion
- 106: casing covering supply hydraulic circuit
- 206: casing covering supply hydraulic circuit
- 107: casing covering return hydraulic circuit
- 207: casing covering return hydraulic circuit
- 108: growing portion door
- 208: growing portion door
- 109: housing door
- 209: housing door

## Claims

1. Method for irrigating vegetables/plants placed on shelves (101, 201) of an apparatus (10, 20) for the growth of edible vegetables and/or ornamental plants in conditions of insufficient natural lighting, said apparatus comprising at least two vertically superimposed shelves (101, 201), preferably a plurality of shelves (101, 201), said method comprising the following steps:
a) Flooding the highest shelf (101, 201) with the water supplied by a supply tube (7) said water dwelling in said shelf for a pre-set time, through the closing of the electro valve (18);
b) Opening said electro valve (18) and emptying said shelf (101, 201) thanks to the shape of the shelf (101, 201) and/or its light tilting, through a port (5) in said shelf (101, 201);
c) Channelling all the water collected from said port (5) to the immediately underlying shelf (101, 201) where it dwells for a pre-defined time through the following electro valve (18);
d) Repeating the steps a), b), c) until the remaining irrigation water is channelled to water sewer or to a discharge reservoir, either in the form of a unique reservoir or in the form of a dedicated discharge reservoir (62).

2. Method for irrigating the vegetables/plants placed on shelves (101, 201) of an apparatus (10, 20) for the growth of edible vegetables and/or ornamental plants in conditions of insufficient natural lighting according to claim 1, wherein a unique reservoir for both supply and discharge is provided or two dedicated supply and discharge reservoirs are provided (63, 62) for the storing of irrigation water; said reservoir/s being preferably supplied with a UV LED emitting radiations capable of disinfecting the water contained in said reservoir/s.

3. Method for irrigating the vegetables/plants placed on shelves (101, 201) of an apparatus (10, 20) for the growth of edible vegetables and/or ornamental plants in conditions of insufficient natural lighting according to claim 1 or 2, wherein a continuous disinfection is performed, by adding a disinfectant product to the irrigation water, said product being preferably a peroxide-based disinfectant.

4. Method for irrigating the vegetables/plants placed on shelves (101, 201) of an apparatus (10, 20) for the growth of edible vegetables and/or ornamental plants in conditions of insufficient natural lighting according to one of claims 1 to 3, wherein said unique reservoir or dedicated supply and discharge reservoirs (62, 63) and tubes (7, 17, 19) are periodically completely cleared of irrigation water and filled with a disinfectant product, preferably a peroxide-based disinfectant, which dwells in tubes and reservoir/s for the time needed to reach disinfection.

5. Apparatus (10, 20) for the growth of edible vegetables and/or ornamental plants in conditions of insufficient natural lighting comprising:
- A tube (7) taking supply water from said reservoir/s or from water mains and carrying it upwards it to the first shelf (101, 201), through the action of a pump (14);
- At least two superimposed shelves (101, 201), each provided with a port (5) for discharging irrigation water;
- At least one tube (17, 19) connecting a shelf (101, 201) to the underlying shelf (101, 201);
- At least an electro valve (18) capable of stopping the flow of water from the shelf (101, 201) to the underlying shelf (101, 201); and
- A control unit (61) controlling at least said valve (18);
**characterized in that**
the vertical arrangement of the superimposed shelves (101, 201) and the presence of the electrovalves (18) is suitable for performing the method according to claims 1-4, wherein the said electro valve (18) is controlled so that the water supplied to a superimposed shelf is let to dwell for a pre-defined time through the closing of said valve before opening it and let the remaining water flood the underlying shelf.

6. Apparatus (10, 20) for the growth of edible vegetables and/or ornamental plants in conditions of insufficient natural lighting according to claim 5 comprising:
- A growing portion (105, 205) closed on six sides, in its turn comprising any number of shelves (101, 201) to support said vegetables/plants;
- At least a LED bar (2) irradiating the vegetables/plants supported on each shelf, said LED bar comprising different kind of LEDs emitting different radiations:
- A first kind of LED emitting red light having a wavelength of 620-670 nm, indicated with R;
- Optionally a second kind of LED emitting blue light having a wavelength of 400-500 nm, indicated with B;
- Optionally a third kind of LED emitting Far Red radiations having a wavelength of 710-850 nm, indicated with FR;
- Optionally a fourth kind of LED, emitting visible radiations having a wavelength of 400-700 nm, indicated with V; and
- A housing (104, 204) for housing a control unit (61) and at least one reservoir either in the form of a not shown unique reservoir or in the form of double dedicated supply and discharge reservoirs (62, 63) for water for irrigating said vegetables/plants,
wherein said control unit (61) houses an internal memory wherein the recipes specifying the parameters for the growth of each kind of vegetable/plant grown inside the growing portion (105, 205) are saved, said parameters being chosen from the group consisting of PAR; PFFD; switching on/off of LEDs of a given kind; working time for each kind of LED; humidity; temperature; irrigation cycles.

7. Apparatus (10, 20) for the growth of edible vegetables and/or ornamental plants in conditions of insufficient natural lighting according to claim 6, wherein said control unit (61) records the actual conditions of the growing cycles of said vegetables/plants taken from the group consisting of actually occurring temperature, humidity, times and modes of radiation, number of irrigation cycles performed, number and duration and date and hour of disinfection cycles manually performed by a human member of the staff.

8. Apparatus (10, 20) for the growth of edible vegetables and/or ornamental plants in conditions of insufficient natural lighting according to one or more of claims 6-7, wherein said actual data on the growth conditions of vegetables/plants are transmitted to portable devices like a smartphone or a tablet and/or to a cloud.

9. Apparatus (10, 20) for the growth of edible vegetables and/or ornamental plants in conditions of insufficient natural lighting according to one or more of claims 5-8, wherein the irrigation of vegetables/plants occurs connecting said apparatus (10, 20) to water mains/sewer, both for water supply and for water discharge.

10. Apparatus (10, 20) for the growth of edible vegetables and/or ornamental plants in conditions of insufficient natural lighting according to one or more of claims 5-8, wherein the irrigation of vegetables/plants occurs connecting said apparatus (10, 20) to at least a water reservoir either in the form of a not shown unique reservoir or double dedicated supply and discharge reservoirs (62, 63) for the storing of irrigation water.

11. Apparatus (10, 20) for the growth of edible vegetables and/or ornamental plants in conditions of insufficient natural lighting according to one or more of the preceding claims 5-10, further comprising at least a switch for switching on said V LEDs, preferably a switch for each shelf (101, 201), emitting visible radiations only for the time wherein said switch is kept pressed by a customer or a member of the staff, or for a pre-defined time, allowing to correctly evaluate the degree of ripeness of the plants grown on said shelf (101, 201).

12. Apparatus (10, 20) for the growth of edible vegetables and/or ornamental plants in conditions of insufficient natural lighting according to one or more of the preceding claims 5-11, further comprising means for adjusting the overall tilting of said apparatus (10, 20) with respect to floor unevenness.

13. Apparatus (10, 20) for the growth of edible vegetables and/or ornamental plants in conditions of insufficient natural lighting according to one or more of the preceding claims 5-12, further comprising means for adjusting the tilting of single shelves (101,201).

14. Apparatus (10, 20) for the growth of edible vegetables and/or ornamental plants in conditions of insufficient natural lighting according to one or more of the preceding claims 5-13, wherein said apparatus is a display cabinet for growing edible or ornamental plants in a point of sale, from which customers can directly withdraw the plants they intend to buy.

## Patentansprüche

1. Verfahren zum Bewässern von Gemüse/Pflanzen, das bzw. die auf Regalen (101, 201) einer Vorrichtung (10, 20) zum Anbau von essbarem Gemüse und/oder Zierpflanzen bei Bedingungen mit unzureichender natürlicher Beleuchtung platziert ist bzw. sind, wobei die Vorrichtung mindestens zwei vertikal überlagerte Regale (101, 201) umfasst, vorzugsweise eine Vielzahl von Regalen (101, 201), wobei das Verfahren die folgenden Schritte umfasst:
a) Überfluten des obersten Regals (101, 201) mit dem von einem Zulaufschlauch (7) zugeführten Wasser, wobei das Wasser im Regal für eine vorbestimmte Zeitspanne verweilt, durch das Schließen des Magnetventils (18);
b) Öffnen des Magnetventils (18) und Leeren des Regals (101, 201) dank der Form des Regals (101, 201) und/oder seiner leichten Neigung, durch eine Mündung (5) im Regal (101, 201);
c) Leiten des gesamten Wassers, das von der Mündung (5) gesammelt wurde, zum unmittelbar darunter liegenden Regal (101, 201), wo es für eine vordefinierte Zeitspanne verweilt, durch das folgende Magnetventil (18);
d) Wiederholen der Schritte a), b), c), bis das verbleibende Bewässerungswasser zu einem Abwasserkanal oder zu einem Abwasserbehälter geleitet wird, entweder in Form eines einzelnen Behälters oder in Form eines zweckbestimmten Abwasserbehälters (62).

2. Verfahren zum Bewässern von Gemüse/Pflanzen, das bzw. die auf Regalen (101, 201) einer Vorrichtung (10, 20) zum Anbau von essbarem Gemüse und/oder Zierpflanzen bei Bedingungen mit unzureichender natürlicher Beleuchtung platziert ist bzw. sind, nach Anspruch 1, wobei ein einzelner Behälter sowohl für Zufuhr als auch Abwasser vorgesehen ist oder zwei gesonderte Zufuhr- und Abwasserbehälter zum Aufbewahren von Bewässerungswasser vorgesehen sind (63, 62); wobei der bzw. die Behälter vorzugsweise mit einer UV-LED versehen ist bzw. sind, die Strahlung emittiert, die das in dem Behälter bzw. den Behältern enthaltene Wasser desinfizieren kann.

3. Verfahren zum Bewässern von Gemüse/Pflanzen, das bzw. die auf Regalen (101, 201) einer Vorrichtung (10, 20) zum Anbau von essbarem Gemüse und/oder Zierpflanzen bei Bedingungen mit unzureichender natürlicher Beleuchtung platziert ist bzw. sind, nach Anspruch 1 oder 2, wobei eine fortlaufende Desinfizierung durch Hinzufügen eines Desinfektionsprodukts zum Bewässerungswasser durchgeführt wird, wobei das Produkt vorzugsweise ein Desinfektionsmittel auf Peroxidbasis ist.

4. Verfahren zum Bewässern von Gemüse/Pflanzen, das bzw. die auf Regalen (101, 201) einer Vorrichtung (10, 20) zum Anbau von essbarem Gemüse und/oder Zierpflanzen bei Bedingungen mit unzureichender natürlicher Beleuchtung platziert ist bzw. sind, nach einem der Ansprüche 1 bis 3, wobei der einzelne Behälter oder die gesonderten Zufuhr- und Abwasserbehälter (62, 63) und Schläuche (7, 17, 19) periodisch vollständig von Bewässerungswasser geleert werden und mit einem Desinfektionsprodukt gefüllt werden, vorzugsweise einem Desinfektionsmittel auf Peroxidbasis, das in Schläuchen und Behälter(n) für die Zeitspanne verweilt, um eine Desinfektion zu erreichen.

5. Vorrichtung (10, 20) für den Anbau von essbarem Gemüse und/oder Zierpflanzen bei Bedingungen mit unzureichender natürlicher Beleuchtung, umfassend:
- einen Schlauch (7), der Zulaufwasser von dem/den Behälter(n) oder von einer Hauptwasserleitung aufnimmt und es durch die Wirkung einer Pumpe (14) nach oben zum ersten Regal (101, 201) trägt;
- mindestens zwei überlagerte Regale (101, 201), die jeweils mit einer Mündung (5) zum Ablassen von Bewässerungswasser versehen sind;
- mindestens einen Schlauch (17, 19), der ein Regal (101, 201) mit dem darunter liegenden Regal (101, 201) verbindet;
- mindestens ein Magnetventil (18), das fähig ist, den Fluss von Wasser vom Regal (101, 201) zum darunter liegenden Regal (101, 201) anzuhalten; und
- eine Steuereinheit (61), die zumindest das Ventil (18) steuert;
**dadurch gekennzeichnet, dass**
die vertikale Anordnung der überlagerten Regale (101, 201) und das Vorhandensein der Magnetventile (18) zum Durchführen des Verfahrens nach den Ansprüchen 1-4 geeignet ist, wobei das Magnetventil (18) so gesteuert ist, dass das einem überlagerten Regal zugeführte Wasser für eine vorbestimmte Zeitspanne durch das Schließen des Ventils verweilen gelassen wird, bevor es geöffnet wird und das restliche Wasser das darunter liegende Regal überfluten lässt.

6. Vorrichtung (10, 20) für den Anbau von essbarem Gemüse und/oder Zierpflanzen bei Bedingungen mit unzureichender natürlicher Beleuchtung nach Anspruch 5, umfassend:
- einen Anbauabschnitt (105, 205), der auf sechs Seiten geschlossen ist, der wiederum eine beliebige Anzahl von Regalen (101, 201) umfasst, um das Gemüse/die Pflanzen zu tragen;
- mindestens einen LED-Balken (2), der das auf jedem Regal getragene Gemüse/die auf jedem Regal getragenen Pflanzen bewässert, wobei der LED-Balken unterschiedliche Arten von LEDs umfasst, die unterschiedliche Strahlungen emittieren:
- eine erste Art von LED, die rotes Licht mit einer Wellenlänge von 620-670 nm emittiert, das mit R bezeichnet wird;
- optional eine zweite Art von LED, die blaues Licht mit einer Wellenlänge von 400-500 nm emittiert, das mit B bezeichnet wird;
- optional eine dritte Art von LED, die dunkelrotes Licht mit einer Wellenlänge von 710-850 nm emittiert, das mit FR bezeichnet wird;
- optional eine vierte Art von LED, die sichtbare Strahlung mit einer Wellenlänge von 400-700 nm emittiert, die mit V bezeichnet wird; und
- ein Gehäuse (104, 204) zum Aufnehmen einer Steuereinheit (61) und mindestens eines Behälters entweder in Form eines nicht gezeigten einzelnen Behälters oder in Form von doppelten gesonderten Zufuhr- und Abwasserbehältern (62, 63) für Wasser zum Bewässern des Gemüses/der Pflanzen,
wobei die Steuereinheit (61) einen internen Speicher beherbergt, wo die Rezepturen gespeichert sind, die die Parameter zum Anbau jeder Art von Gemüse/Pflanze angeben, die im Inneren des Anbauabschnitts (105, 205) angebaut werden, wobei die Parameter aus der Gruppe ausgewählt sind, bestehend aus PAR; PFFD; Ein-/Ausschalten von LEDs einer bestimmten Art; Betriebszeit für jede Art von LED; Luftfeuchtigkeit; Temperatur; Bewässerungszyklen.

7. Vorrichtung (10, 20) für den Anbau von essbarem Gemüse und/oder Zierpflanzen bei Bedingungen mit unzureichender natürlicher Beleuchtung nach Anspruch 6, wobei die Steuereinheit (61) die tatsächlichen Bedingungen der Anbauzyklen des Gemüses/der Pflanzen aufzeichnet, die aus der Gruppe genommen sind, bestehend aus tatsächlich auftretender Temperatur, Luftfeuchtigkeit, Zeiten und Modi von Strahlung, Anzahl von durchgeführten Bewässerungszyklen, Anzahl und Dauer und Datum und Uhrzeit von manuell von einem menschlichen Mitarbeiter durchgeführten Desinfektionszyklen.

8. Vorrichtung (10, 20) für den Anbau von essbarem Gemüse und/oder Zierpflanzen bei Bedingungen mit unzureichender natürlicher Beleuchtung nach einem oder mehreren der Ansprüche 6-7, wobei die tatsächlichen Daten über die Anbaubedingungen von Gemüse/Pflanzen an tragbare Einrichtungen wie ein Smartphone oder ein Tablet und/oder in eine Cloud gesendet werden.

9. Vorrichtung (10, 20) für den Anbau von essbarem Gemüse und/oder Zierpflanzen bei Bedingungen mit unzureichender natürlicher Beleuchtung nach einem oder mehreren der Ansprüche 5-8, wobei die Bewässerung von Gemüse/Pflanzen durch Verbinden der Vorrichtung (10, 20) an eine Hauptwasserleitung/einen Abwasserkanal stattfindet, sowohl zur Wasserzufuhr als auch Wasserableitung.

10. Vorrichtung (10, 20) für den Anbau von essbarem Gemüse und/oder Zierpflanzen bei Bedingungen mit unzureichender natürlicher Beleuchtung nach einem oder mehreren der Ansprüche 5-8, wobei die Bewässerung von Gemüse/Pflanzen durch Verbinden der Vorrichtung (10, 20) mit zumindest einem Wasserbehälter entweder in der Form eines nicht gezeigten einzelnen Behälters oder von doppelten gesonderten Zufuhr- und Abwasserbehältern (62, 63) zum Aufbewahren von Bewässerungswasser stattfindet.

11. Vorrichtung (10, 20) für den Anbau von essbarem Gemüse und/oder Zierpflanzen bei Bedingungen mit unzureichender natürlicher Beleuchtung nach einem oder mehreren der Ansprüche 5-10, die ferner zumindest einen Schalter zum Einschalten der V-LEDs umfasst, vorzugsweise einen Schalter für jedes Regal (101, 201), wobei sichtbare Strahlung nur für die Zeitspanne, in der der Schalter von einem Kunden oder einem Mitarbeiter gedrückt gehalten wird, oder für eine vordefinierte Zeitspanne emittiert wird, was ermöglicht, den Reifegrad der auf dem Regal (101, 201) angebauten Pflanzen richtig zu beurteilen.

12. Vorrichtung (10, 20) für den Anbau von essbarem Gemüse und/oder Zierpflanzen bei Bedingungen mit unzureichender natürlicher Beleuchtung nach einem oder mehreren der Ansprüche 5-11, die ferner Mittel zum Anpassen der Gesamtneigung der Vorrichtung (10, 20) in Bezug auf Bodenunebenheiten umfasst.

13. Vorrichtung (10, 20) für den Anbau von essbarem Gemüse und/oder Zierpflanzen bei Bedingungen mit unzureichender natürlicher Beleuchtung nach einem oder mehreren der Ansprüche 5-12, die ferner Mittel zum Anpassen der Neigung einzelner Regale (101, 201) umfasst.

14. Vorrichtung (10, 20) für den Anbau von essbarem Gemüse und/oder Zierpflanzen bei Bedingungen mit unzureichender natürlicher Beleuchtung nach einem oder mehreren der Ansprüche 5-13, wobei die Vorrichtung eine Vitrine zum Anbauen essbarer oder Zierpflanzen an einem Verkaufsstandort ist, aus der Kunden direkt die Pflanzen entnehmen können, die sie kaufen wollen.

## Revendications

1. Procédé d'irrigation de légumes/plantes placés sur des étagères (101, 201) d'un appareil (10, 20) pour la croissance de légumes comestibles et/ou de plantes décoratives dans des conditions d'éclairage naturel insuffisant, ledit appareil comprenant au moins deux étagères superposées verticalement (101, 201), de préférence une pluralité d'étagères (101, 201), ledit procédé comprenant les étapes suivantes :
a) inonder l'étagère la plus haute (101, 201) avec de l'eau distribuée par un tube de distribution (7), ladite eau demeurant dans ladite étagère pendant une durée prédéfinie, par la fermeture de l'électrovanne (18) ;
b) ouvrir ladite électrovanne (18) et vider ladite étagère (101, 201) grâce à la forme de l'étagère (101, 201) et/ou sa légère inclinaison, à travers un orifice (5) dans ladite étagère (101, 201) ;
c) canaliser la totalité de l'eau collectée à partir dudit orifice (5) jusqu'à l'étagère immédiatement sous-jacente (101, 201), où elle est demeure pendant une durée prédéfinie par l'électrovanne suivante (18) ;
d) répéter les étapes a), b) et c) jusqu'à ce que l'eau d'irrigation restante soit canalisée jusqu'à un égout pour eau ou à un réservoir d'évacuation, sous la forme d'un unique réservoir ou sous la forme d'un réservoir d'évacuation dédié (62).

2. Procédé d'irrigation des légumes/plantes placés sur des étagères (101, 201) d'un appareil (10, 20) pour la croissance de légumes comestibles et/ou de plantes décoratives dans des conditions d'éclairage naturel insuffisant selon la revendication 1, dans lequel un unique réservoir à la fois pour la distribution et l'évacuation est prévu ou deux réservoirs de distribution et d'évacuation dédiés sont prévus (63, 62) pour le stockage d'eau d'irrigation ; ledit ou lesdits réservoirs comportant, de préférence, une DEL UV émettant des rayonnements capables de désinfecter l'eau contenue dans ledit ou lesdits réservoirs.

3. Procédé d'irrigation des légumes/plantes placés sur des étagères (101, 201) d'un appareil (10, 20) pour la croissance de légumes comestibles et/ou de plantes décoratives dans des conditions d'éclairage naturel insuffisant selon la revendication 1 ou 2, dans lequel une désinfection continue est réalisée par ajout d'un produit désinfectant à l'eau d'irrigation, ledit produit étant, de préférence, un désinfectant à base de peroxyde.

4. Procédé d'irrigation des légumes/plantes placés sur des étagères (101, 201) d'un appareil (10, 20) pour la croissance de légumes comestibles et/ou de plantes décoratives dans des conditions d'éclairage naturel insuffisant selon l'une des revendications 1 à 3, dans lequel ledit unique réservoir ou lesdits réservoirs de distribution et d'évacuation dédiés (62, 63) et tubes (7, 17, 19) sont périodiquement entièrement débarrassés de l'eau d'irrigation et remplis d'un produit désinfectant, de préférence un désinfectant à base de peroxyde, qui demeure dans les tubes et le ou les réservoirs pendant la durée nécessaire pour obtenir une désinfection.

5. Appareil (10, 20) pour la croissance de légumes comestibles et/ou de plantes décoratives dans des conditions d'éclairage naturel insuffisant comprenant :
- un tube (7) prenant de l'eau de distribution à partir dudit ou desdits réservoirs ou à partir de conduites principales d'eau et la transportant jusqu'à la première étagère (101, 201), par l'intermédiaire de l'action d'une pompe (14) ;
- au moins deux étagères superposées (101, 201), comportant chacune un orifice (5) pour évacuer de l'eau d'irrigation ;
- au moins un tube (17, 19) reliant une étagère (101, 201) à l'étagère sous-jacente (101, 201) ;
- au moins une électrovanne (18) capable d'arrêter l'écoulement d'eau de l'étagère (101, 201) à l'étagère sous-jacente (101, 201) ; et
- une unité de commande (61) commandant au moins ladite vanne (18) ;
**caractérisé par le fait que**
l'agencement vertical des étagères superposées (101, 201) et la présence des électrovannes (18) sont appropriés pour réaliser le procédé selon les revendications 1 à 4, ladite électrovanne (18) étant commandée de telle sorte que l'eau distribuée à une étagère superposée est amenée à demeurer pendant une durée prédéfinie par la fermeture de ladite vanne avant l'ouverture de celle-ci et d'amener l'eau restante à inonder l'étagère sous-jacente.

6. Appareil (10, 20) pour la croissance des légumes comestibles et/ou des plantes décoratives dans des conditions d'éclairage naturel insuffisant selon la revendication 5, comprenant :
- une partie de croissance (105, 205) fermée sur six côtés, comprenant à son tour un nombre quelconque d'étagères (101, 201) pour supporter lesdits légumes/plantes ;
- au moins une barre à DEL (2) irradiant les légumes/plantes supportés sur chaque étagère, ladite barre à DEL comprenant différents types de DELs émettant différents rayonnements :
- un premier type de DEL émettant de la lumière rouge ayant une longueur d'onde de 620-670 nm, indiqué par R ;
- facultativement, un deuxième type de DEL émettant de la lumière bleue ayant une longueur d'onde de 400-500 nm, indiqué par B ;
- facultativement, un troisième type de DEL émettant des rayonnements dans le rouge lointain ayant une longueur d'onde de 710-850 nm, indiqué par FR ;
- facultativement, un quatrième type de DEL émettant des rayonnements visibles ayant une longueur d'onde de 400-700 nm, indiqué par V ; et
- un boîtier (104, 204) pour loger une unité de commande (61) et au moins un réservoir sous la forme d'un unique réservoir non représenté ou sous la forme de doubles réservoirs de distribution et d'évacuation dédiés (62, 63) pour de l'eau pour irriguer lesdits légumes/plantes,
ladite unité de commande (61) logeant une mémoire interne, dans laquelle les formules spécifiant les paramètres pour la croissance de chaque type de légume/plante amené à croître à l'intérieur de la partie de croissance (105, 205) sont sauvegardées, lesdits paramètres étant choisis parmi le groupe constitué de RPA ; DFFP ; commutation sur marche/arrêt de DELs d'un type donné ; temps de fonctionnement pour chaque type de DEL ; humidité ; température ; cycles d'irrigation.

7. Appareil (10, 20) pour la croissance de légumes comestibles et/ou de plantes décoratives dans des conditions d'éclairage naturel insuffisant selon la revendication 6, dans lequel ladite unité de commande (61) enregistre les conditions réelles des cycles de croissance desdits légumes/plantes prises parmi le groupe constitué de température, humidité, temps et modes de rayonnement se produisant réellement, de nombre de cycles d'irrigation réalisés, de nombre et durée et date et heure de cycles de désinfection réalisés manuellement par un membre humain du personnel.

8. Appareil (10, 20) pour la croissance de légumes comestibles et/ou de plantes décoratives dans des conditions d'éclairage naturel insuffisant selon une ou plusieurs des revendications 6 et 7, dans lequel lesdites données réelles sur les conditions de croissance de légumes/plantes sont transmises à des dispositifs portables tels qu'un téléphone intelligent ou une tablette et/ou à un nuage.

9. Appareil (10, 20) pour la croissance de légumes comestibles et/ou de plantes décoratives dans des conditions d'éclairage naturel insuffisant selon une ou plusieurs des revendications 5 à 8, dans lequel l'irrigation de légumes/plantes se produit en reliant ledit appareil (10, 20) à des conduites principales d'eau/égout, à la fois pour la distribution d'eau et pour l'évacuation d'eau.

10. Appareil (10, 20) pour la croissance de légumes comestibles et/ou de plantes décoratives dans des conditions d'éclairage naturel insuffisant selon une ou plusieurs des revendications 5 à 8, dans lequel l'irrigation de légumes/plantes se produit en reliant ledit appareil (10, 20) à au moins un réservoir d'eau sous la forme d'un unique réservoir non représenté ou de doubles réservoirs de distribution et d'évacuation dédiés (62, 63) pour le stockage d'eau d'irrigation.

11. Appareil (10, 20) pour la croissance de légumes comestibles et/ou de plantes décoratives dans des conditions d'éclairage naturel insuffisant selon une ou plusieurs des revendications 5 à 10, comprenant en outre au moins un commutateur pour mettre en marche lesdites DELs V, de préférence un commutateur pour chaque étagère (101, 201), émettant des rayonnements visibles uniquement pendant la durée pendant laquelle ledit commutateur est maintenu enfoncé par un client ou un membre du personnel, ou pendant une durée prédéfinie, permettant d'évaluer correctement le degré de maturité des plantes amenées à croître sur ladite étagère (101, 201).

12. Appareil (10, 20) pour la croissance de légumes comestibles et/ou de plantes décoratives dans des conditions d'éclairage naturel insuffisant selon une ou plusieurs des revendications 5 à 11, comprenant en outre des moyens pour ajuster l'inclinaison globale dudit appareil (10, 20) par rapport à une irrégularité de sol.

13. Appareil (10, 20) pour la croissance de légumes comestibles et/ou de plantes décoratives dans des conditions d'éclairage naturel insuffisant selon une ou plusieurs des revendications 5 à 12, comprenant en outre des moyens pour ajuster l'inclinaison d'étagères individuelles (101, 201).

14. Appareil (10, 20) pour la croissance de légumes comestibles et/ou de plantes décoratives dans des conditions d'éclairage naturel insuffisant selon une ou plusieurs des revendications 5 à 13, ledit appareil étant une armoire de présentation pour faire croître des plantes comestibles ou décoratives dans un point de vente, à partir de laquelle des clients peuvent retirer directement les plantes qu'ils souhaitent acheter.
